# EUROPEAN PATENT SPECIFICATION

(11) **EP 2 410 786 B1**
(45) Date of publication and mention of the grant of the patent: **03.10.2018**
(21) Application number: 09841770.2
(22) Date of filing: 29.12.2009
(51) Int. Cl.: H04W 28/00, H04B 7/26

(54) **RECEIVING METHOD AND DEVICE FOR DOWNLINK SERVICE IN LONG TERM EVOLUTION SYSTEM**
EMPFANGSVERFAHREN UND EINRICHTUNG FÜR ABWÄRTSSTRECKENDIENST IM LONG-TERM-EVOLUTION-SYSTEM
PROCÉDÉ ET DISPOSITIF DE RÉCEPTION D'UN SERVICE SUR LA LIAISON DESCENDANTE DANS UN SYSTÈME D'ÉVOLUTION À LONG TERME

(30) Priority: 18.03.2009 CN 200910080084
(43) Date of publication of application: 25.01.2012
(73) Proprietor: ZTE Corporation, Shenzhen, Guangdong 518057 (CN)
(72) Inventor: MAO, Lei, Shenzhen Guangdong 518057 (CN); MA, Zijiang, Shenzhen Guangdong 518057 (CN)
(74) Representative: Lampis, Marco
(86) International application number: PCT/CN2009/076202
(87) International publication number: WO 2010/105487

(56) References cited:
- EP-A2- 1 748 576
- WO-A1-2008/040931
- WO-A1-2008/136830
- CN-A- 101 030 802
- US-A1- 2008 081 570
- US-A1- 2008 159 253

## Description

### Technical Field

The present invention relates to the technique for receiving services of the user terminal, and particularly, to a method and apparatus for receiving a downlink service when a relay exists in a Long Term Evolution (LTE) system.

### Background of the Related Art

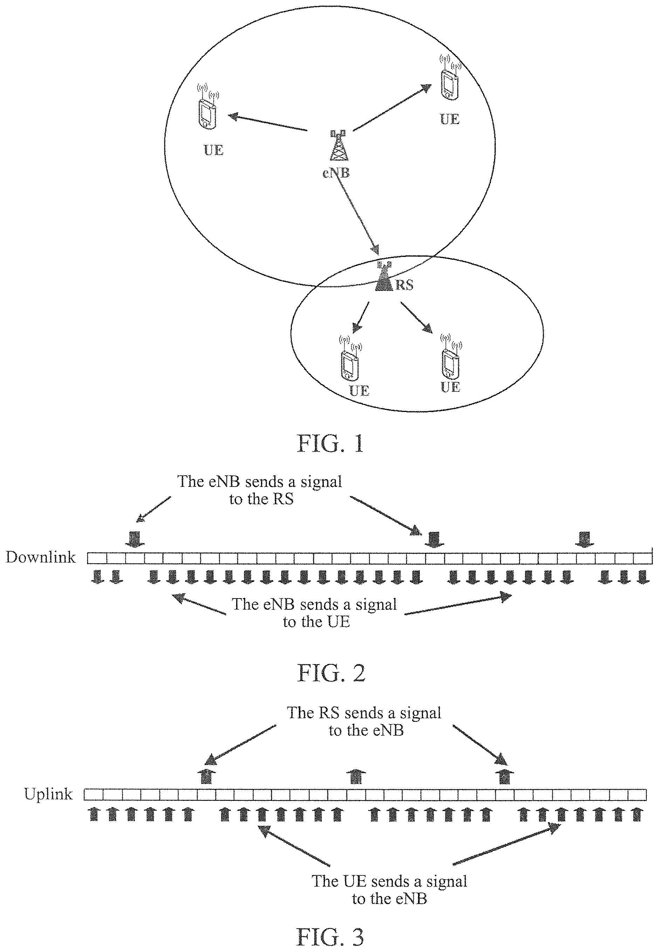

The 3rd Generation Partnership Project (3GPP) starts the LTE research work group, which researches and designs the next generation network of the evolved 3G of the 3rd generation mobile communication technique. At present, in order to improve the coverage gain of the cell border and implement the supplement blind effect, the Relay technique is introduced into the LTE-Advanced technique in the 3GPP. FIG. 1 is a structure schematic diagram of composition of the LTE-Advanced network, and as shown in FIG. 1, the LTE-Advanced network comprises an evolved Node B (eNB) and a Relay Station (RS), and the eNB not only provides service for the UE of the cell itself, but also executes the data transmission and signaling interaction with a plurality of RSs controlled by this eNB. Similarly, each RS not only communicates with this eNB, but also provides service for User Equipments (UE) under this RS. The link from the eNB to the RS and the link from the RS to the UE can use the same frequency resources, which is called as the in-band Relay, and also can use different frequency resources, which is called as the out-band Relay. FIG. 2 is a schematic diagram of sending downlink data of the in-band Relay, and as shown in FIG. 2, when the data is sent in the in-band Relay, and when this eNB sends data to a certain RS under the control of the eNB on a certain subframe/certain subframes in a downlink, this RS is only able to receive data from the eNB on this/these subframes, and is unable to send a signal to the UE served by this RS on this downlink at the same time, otherwise stronger interferences will be generated. FIG. 3 is a schematic diagram of sending uplink data of the in-band Relay, and as shown in FIG. 3, similarly, when a RS receives the uplink data from the UE served by the RS on a certain subframe/certain subframes, the RS is unable to send an uplink signal to the eNB on this/these subframes at the same time.

On a certain subframe/certain subframes of the downlink, the network element RS is required to receive the signal and data from its control network elements, such as the eNB, the Gateway GPRS Support Node (GGSN), the General Packet Radio Service (GPRS), and the Radio Network Controller (RNC). The control network element takes the eNB as an example, and on this/these subframes, since the network element RS is required to receive data from the its control network element eNB, in order to avoid the interference caused by sending and receiving data at the same time, the RS is unable to send data to the cell controlled by this RS at the same time, that is, the network element RS is unable to send and receive data on one subframe at the same time. These special subframes for information interaction between the RS and its controll network element are called as the Relay subframe, including the uplink Relay subframe and the downlink Relay subframe, wherein at the time when the uplink Relay subframe is used for the RS sending response information to its control network elements, the UE is unable to send uplink data to the RS; the downlink Relay subframe is used for the RS receiving data from its control network element, and the UE is not notified to receive data in this subframe.

Besides the Relay subframe, the subframe of information interaction between the RS and UEs served by this RS is called as the service subframe, and for a downlink service subframe, the RS sends the signal and the UE receives the signal; for an uplink service subframe, the RS receives the signal sent from the UE.

Due to the complexity and variability of the communication conditions, channel conditions of user terminals which are located in different areas are not the same, and particular for the user terminal located in the cell edge jointly covered by the eNB and the RS, the channel condition is worse, and the user terminal is unable to ensure that received data are correct and integrated, but the eNB and the RS will send the same service data at the same time or respectively, which is equivalent that the network side diversely sends service data, and if the user terminal is able to utilize this feature to respectively receive the service data sent from the eNB and the RS, the accuracy and integrity of service data received by the user terminal will be ensured, and the communication quality of these user terminals is ensured very well. However, the current user terminal does not support this function.

An example of prior art method is described in WO 2008/136830A1 (LUCENT TECHNOLOGIES INC [US]; LUCENT TECH NETWORK SYS GMBH[DE]; DEKOR) 13 November 2008 (2008-11-13) and relevant technologies are also known from EP 1748576 (SONY CORP [JP]) 31 January 2007 (2007-01-31), WO 2008/040931 A1 (FUJITSU LTD) 10 April 2008 (2008-04-10) and US 2008/159253A1(MOTOROLA INC) 3 July 2008 (2008-07-03).

### Summary of the Invention

In view of this, the main purpose of the present invention is to provide a method and apparatus for receiving a downlink service in a long term evolution system, which is able to ensure the integrity of service data received by the user terminal, and improve the communication quality thereof as defined in the attached independent claims.

In order to achieve the above purpose, the technical scheme of the present invention is implemented as follows:
a method for receiving a downlink service in a long term evolution system comprises:
after receiving downlink service configuration information of a network side, a user terminal obtaining information of a bearer time slot of a base station side and a bearer time slot of a relay station side which carry a same downlink service of said user terminal in said downlink service configuration information; and
said user terminal judging whether channel quality of bearer channels where said bearer time slot of the base station side and said bearer time slot of the relay station side are located reach to a set threshold respectively, and when both do not reach to the set threshold, intercepting said bearer time slot of the base station side and said bearer time slot of the relay station side, and combining the downlink service sent by said base station side with the downlink service sent by said relay station side after obtaining the downlink service sent by said base station side and the downlink service sent by said relay station side.

Preferably, said method further comprises:
when said user terminal determines that the channel quality of at least one bearer channel in the bearer channels where said bearer time slot of the base station side and said bearer time slot of the relay station side are located reaches to the set threshold, only intercepting the bearer time slot corresponding to the one bearer channel of which the channel quality reaches to the set threshold.

Preferably, the bearer time slot of the base station side and the bearer time slot of the relay station side of the same downlink service of said user terminal are located in carriers of a same frequency or different frequencies.

Preferably, said downlink service configuration information further includes indication information of a relay mode used by the network side.

Preferably, when said user terminal determines that the relay mode used by the network side is a layer one relay mode, obtained said downlink service of said base station side and the downlink service of said relay station side are combined in a physical layer.

Preferably, when said user terminal determines that the relay mode used by the network side is a layer two relay mode or layer three relay mode, obtained said downlink service of said base station side and the downlink service of said relay station side are combined after carrying out physical layer processing and layer two processing respectively on obtained said downlink service of said base station side and the downlink service of said relay station side.

Also provided is a method for receiving a downlink service in a long term evolution system comprises:
after receiving downlink service configuration information of a network side, a user terminal obtaining information of a bearer time slot of a base station side and a bearer time slot of a relay station side which carry a same downlink service of said user terminal in said downlink service configuration information, intercepting said bearer time slot of the base station side and said bearer time slot of the relay station side, and combining the downlink service of said base station side with the downlink service of said relay station side after obtaining the downlink service of said base station side and the downlink service of said relay station side.

Preferably, said downlink service configuration information further includes indication information of a relay mode used by the network side.

Preferably, when said user terminal determines that the relay mode used by the network side is a layer one relay mode, obtained said downlink service of said base station side and the downlink service of said relay station side are combined in a physical layer.

Preferably, when said user terminal determines that the relay mode used by the network side is a layer two relay mode or layer three relay mode, obtained said downlink service of said base station side and the downlink service of said relay station side are combined after carrying out physical layer processing and layer two processing respectively on obtained said downlink service of said base station side and the downlink service of said relay station side.

An apparatus for receiving a downlink service in a long term evolution system comprises:
a receiving unit, which is configured to receive downlink service configuration information of a network side;
a bearer information obtaining unit, which is configured to obtain information of a bearer time slot of a base station side and a bearer time slot of a relay station side of a same downlink service of said user terminal in said downlink service configuration information;
a judging unit, which is configured to judge whether channel quality of bearer channels where said bearer time slot of the base station side and said bearer time slot of the relay station side are located reach to a set threshold respectively, and when both do not reach to the set threshold, to trigger a first service obtaining unit;
the first service obtaining unit, which is configured to intercept said bearer time slot of the base station side and said bearer time slot of the relay station side respectively, and obtain the downlink service of said base station side and the downlink service of said relay station side; and
a combining unit, which is configured to combine obtained said downlink service of said base station side with the downlink service of said relay station side.

Preferably, said apparatus further comprises a second service obtaining unit,
said judging unit is also configured to when the channel quality of at least one bearer channel in the bearer channels where said bearer time slot of the base station side and said bearer time slot of the relay station side are located reaches to the set threshold is judged, trigger the second service obtaining unit;
said second service obtaining unit is configured to only intercept the bearer time slot corresponding to the one bearer channel of which the channel quality reaches to the set threshold, and directly obtain the downlink service of said base station side and the downlink service of said relay station side.

Preferably, said apparatus further comprises a determining unit, and said determining unit is configured to determine a relay mode used by the network side; wherein
said downlink service configuration information further includes indication information of the relay mode used by the network side;
said combining unit is configured to:
when said determining unit determines that the relay mode used by the network side is a layer one relay mode, combine the downlink service of said base station side with the downlink service of said relay station side obtained by the first service obtaining unit in a physical layer; and
when said determining unit determines that the relay mode used by the network side is a layer two relay mode or layer three relay mode, combine the downlink service of said base station side with the downlink service of said relay station side after said combining unit carries out physical layer processing and layer two processing respectively on said downlink service of said base station side and the downlink service of said relay station side obtained by said first service obtaining unit.

Also provided is an apparatus for receiving a downlink service in a long term evolution system comprises:
a receiving unit, which is configured to receive downlink service configuration information of a network side;
a bearer information obtaining unit, which is configured to obtain information of a bearer time slot of a base station side and a bearer time slot of a relay station side of a same downlink service of a user terminal in said downlink service configuration information;
a service obtaining unit, which is configured to respectively intercept said bearer time slot of the base station side and said bearer time slot of the relay station side, and obtain the downlink service of said base station side and the downlink service of said relay station side; and
a combining unit, which is configured to combine obtained the downlink service of said base station side with the downlink service of said relay station side.

Preferably, said apparatus further comprises a determining unit, and said determining unit is configured to determine a relay mode used by the network side; wherein
said downlink service configuration information further includes indication information of the relay mode used by the network side;
said combining unit is configured to:
when said determining unit determines that the relay mode used by the network side is a layer one relay mode, combine the downlink service of said base station side with the downlink service of said relay station side obtained by the service obtaining unit in a physical layer; and
when said determining unit determines that the relay mode used by the network side is a layer two relay mode or layer three relay mode, combine the downlink service of said base station side with the downlink service of said relay station side after carrying out physical layer processing and layer two processing respectively on said downlink service of said base station side and the downlink service of said relay station side obtained by said service obtaining unit.

In the present invention, after the downlink service configuration is finished, the network side notifies the downlink service configuration information to the user terminal, and the downlink service configuration information includes information of the bearer time slot of the base station side and the bearer time slot of the relay station side, and information of the used relay mode and so on, thus, the user terminal respectively intercepts the downlink service in the bearer time slot of the base station side and the bearer time slot of the relay station side, and combines the downlink services intercepted respectively, which is equivalent to the diversity processing of the downlink services, and the data integrity of service data received twice is better than that of service data received once, particularly for the user terminal located in the cell edge jointly covered by the eNB and the RS. The present invention improves the downlink service gain of the user terminal in the cell edge jointly covered by the eNB and the RS, and ensures the communication quality of the terminal user.

### Brief Description of Drawings

FIG. 1 is a structure schematic diagram of composition of the LTE-Advanced network;
FIG. 2 is a schematic diagram of sending downlink data of the in-band Relay;
FIG. 3 is a schematic diagram of sending uplink data of the in-band Relay;
FIG. 4 is a flow chart of the method for receiving the downlink service in a long term evolution system according to the present invention;
FIG. 5 is a flow chart of another method for receiving the downlink service in a long term evolution system;
FIG. 6 is a structure schematic diagram of composition of the apparatus for receiving the downlink service in a long term evolution system according to the present invention;
FIG. 7 is a structure schematic diagram of composition of another apparatus for receiving the downlink service in a long term evolution system.

### Preferred Embodiments of the Present Invention

The basic concept of the present invention is: after the downlink service configuration is finished, the network side notifies the downlink service configuration information to the user terminal, and the downlink service configuration information includes information of the bearer time slot of the base station side and the bearer time slot of the Relay station side, and information of the used relay mode and so on, thus, the user terminal respectively intercepts the downlink service in the bearer time slot of the base station side and the bearer time slot of the relay station side, and combines the downlink services intercepted respectively, which is equivalent to the diversity processing of the downlink services, and the data integrity of service data received twice is better than that of service data received once, particularly for the user terminal located in the cell edge jointly covered by the eNB and the RS. The present invention improves the downlink service gain of the user terminal in the cell edge jointly covered by the eNB and the RS, and ensures the communication quality of the user of the user terminal.

In order to make the purpose, technical scheme and advantages of the present invention clearer, it will further illustrate the present invention in detail with reference to figures and examples taken below.

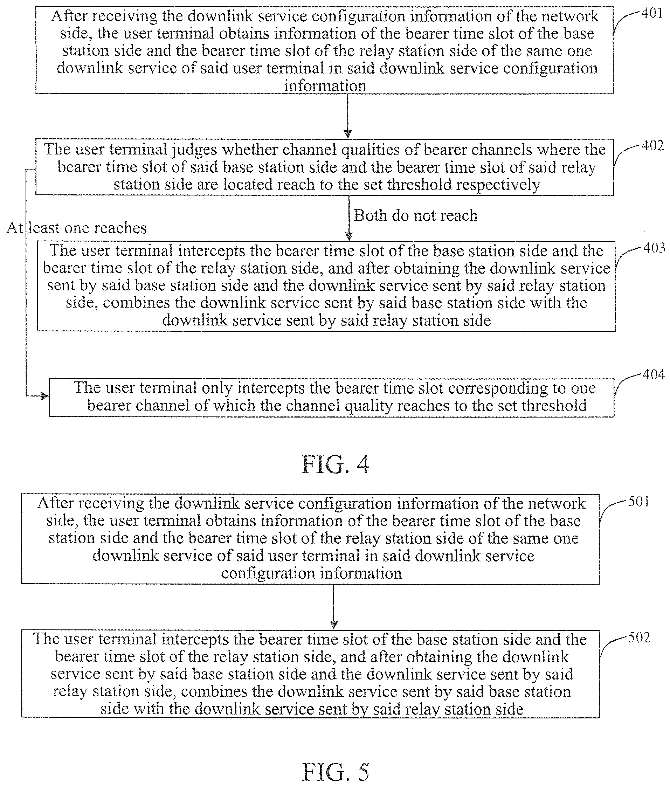

FIG. 4 is a flow chart of the method for receiving the downlink service in a long term evolution system according to the present invention, and as shown in FIG. 4, the method for receiving the downlink service in the long term evolution system of the present invention comprises the following steps of:
step 401, after receiving the downlink service configuration information of the network side, the user terminal obtains information of the bearer time slot of the base station side and the bearer time slot of the relay station side which carry the same one downlink service of said user terminal in said downlink service configuration information.

In the LTE system configured with the Relay station, the one completing the service configuration operation is the eNB, and the eNB carries out the link configurations such as the carrier frequency, the time slot or subframe bearing the downlink service, the modulation and coding mode, and the wireless resource block and so on for the downlink service of the RS and user terminal, and notifies the bearer time slot of the base station side and the bearer time slot of the relay station side to the RS and the user terminal, and the RS completes the configuration of the downlink service which is sent from itself to the user terminal according to the service configuration information. Notifying the configuration information of the eNB to the user terminal can be completed by the eNB, or completed by the RS.

When the eNB and the RS send the downlink service using the same carrier, and when the RS bears the same downlink service sent to the same user terminal, the RS can directly forward the downlink service after receiving the bearer subframe of the downlink service, or forwards the downlink service after re-allocating resources according to the eNB service resource allocation indication.

The same downlink service of the same user terminal in the bearer time slot of the base station side and the bearer time slot of the relay station side also can be located in different frequency carriers, and that is, when the relay station forwards the downlink service, the relay station can use the carrier which is different from the carrier used by the eNB, and at this time, the time slot bearing the service of the relay station and the time slot bearing the service of the eNB can be located in the subframe with the same subframe number.

Step 402, the user terminal judges whether channel qualities of bearer channels where the bearer time slot of said base station side and the bearer time slot of said relay station side are located reach to the set threshold respectively, and when both do not reach to the set threshold, the step 403 is carried out, otherwise the step 404 is carried out.

The user terminal judges whether channel qualities of the channel from the base station to this user terminal and the channel from the relay station to this user terminal reach to the set threshold, and the channel quality corresponding to said set threshold can satisfy that the user terminal intercepts this channel individually to obtain a better downlink service signal. Parameters for identifying the channel quality include a signal to noise ratio, a signal to interference and noise ratio, and a channel quality indication and so on, and the user terminal can obtain corresponding parameters of the channel quality by measuring the downlink channel, and also can receive parameters of the channel quality sent by the base station side, and determines the channel quality according to parameters of the channel quality. When both of the channel quality of the channel from the base station to this user terminal and the channel from the relay station to this user terminal do not reach to the set threshold, it means that no matter which channel the current user terminal intercepts, the user terminal is unable to obtain a better downlink service signal, and at this time, the user terminal will intercept two channels respectively.

Step 403, the user terminal intercepts the bearer time slot of the base station side and the bearer time slot of the relay station side, and after obtaining the downlink service sent by said base station side and the downlink service sent by said relay station side, combines the downlink service sent by said base station side with the downlink service sent by said relay station side.

The user terminal respectively intercepts the channel from the base station to the user terminal and the channel from the relay station to the user terminal, and combines the received downlink service signals, and particularly, when the relay station and the eNB use the same carrier to bear the downlink service, the downlink service configuration information further includes the indication information of the relay mode used by the network side, and when the user terminal determines that the relay mode used by the network side is the layer one relay mode, the obtained downlink service signal of said base station side and the downlink service signal of said relay station side is combined in the physical layer. The user terminal receives the downlink service signal sent by the eNB in the bearer channel where the time slot bearing the downlink service is located at first, and then receives the same downlink service signal with that sent by the eNB in the bearer channel where the slot bearing the downlink service is located of the relay station, and the user terminal combines the received downlink service signals in the physical layer, then demodulates the signals, and analyzes the signals to obtain the downlink service.

When the user terminal determines that the relay mode used by the network side is the layer two relay mode or layer three relay mode, the obtained downlink service signal of the base station side and the downlink service signal of the relay station side are combined after being carrying out the physical layer processing and the layer two processing respectively. Since the relay station does not directly forward this downlink service subframe in the layer two or layer three relay mode after receiving the downlink service subframe sent by the eNB, but bears the downlink service by different subframes, and forwards to the user terminal after re-allocating resources, and at this time, after receiving the downlink service subframe sent by the relay station, the downlink service subframe sent by the relay station is unable to be combined with the downlink service signal sent by the eNB directly, and at this time, the physical layer processing and layer two processing are required to be respectively carried out for the received downlink service signals sent by the eNB and the relay station, and then the combination is carried out, to ensure that the downlink services before combining are the same.

Step 404: the user terminal only intercepts the bearer time slot corresponding to one bearer channel of which the channel quality reaches to the set threshold.

When it is determined that only the channel quality of the channel from the base station to the user terminal reaches to the set threshold, only the channel from the base station to the user terminal is intercepted to obtain the downlink service; or when it is determined that only the channel quality of the channel from the relay station to the user terminal reaches to the set threshold, only the channel from the relay station to the user terminal is intercepted to obtain the downlink service; when it is determined that both the channel quality of the channels from the base station to the user terminal and the channel from the relay station to the user terminal reach to the set threshold, only one of channels is intercepted to obtain the downlink service.

FIG. 5 is a flow chart of another method for receiving the downlink service in the long term evolution system, and as shown in FIG. 5, the method for receiving the downlink service in the long term evolution comprises the following steps of:
Step 501: after receiving the downlink service configuration information of the network side, the user terminal obtains information of the bearer time slot of the base station side and the bearer time slot of the relay station side which carry the same downlink service of said user terminal in said downlink service configuration information.

The implementation way of the step 501 and the implementation way of the step 401 are the same completely, and herein it will not be described any more.

Step 502: the user terminal intercepts the bearer time slot of said base station side and the bearer time slot of said relay station side, and after obtaining the downlink service sent by said base station side and the downlink service sent by said relay station side, combines the downlink service sent by said base station side with the downlink service sent by said relay station side.

The implementation way of the step 502 and the implementation way of the step 402 are the same completely, and herein it will not be described any more. The most difference between the method for receiving the downlink service shown in FIG. 5 and the method for receiving the downlink service shown in FIG. 4 is: no matter what the channel quality of the downlink channel is, the obtained downlink service of the base station side and the downlink service of the relay station side are directly combined.

It will further illustrate the technical scheme by examples below.

Example one:
in the LTE system, when the layer one Relay technique is used, that is the RS only forwards the downlink service which is sent in the relay subframe from the eNB in another subframe, but does not process the downlink service, and at this time, the downlink services born in these two subframes are the same.

The eNB sends the downlink service to the RS by the air interface at the relay subframe time, and will use the omnidirectional transmission, and the user terminal in the cell covered by the eNB is able to receive the downlink service sent by the eNB. But at the service subframe time, the RS also sends the downlink service signal in omnidirection. The user terminal can receive this downlink service in both of the two subframes.

The essence of the present invention is for the purpose of implementing that the user terminal receives the downlink service twice, and when the network side configures the downlink service, besides that the transmission parameters corresponding to this service are configured, the relay subframe time and the service subframe time bearing this service are also configured to the UE; and the network side notifies the used Relay technique to the UE. In this example, the layer one Relay technique is equivalent to indicate the UE that the used configuration parameters at two service subframe times of the eNB and the RS are the same. Herein the transmission parameters include basic link information of the carrier frequency, the subcarrier frequency band, and the modulation and coding mode and so on.

After UE receives the configuration parameters, it is obtained that this downlink service uses the time division transmission mode; when the UE receives this service, according to configuration information, the UE carries out reception at the corresponding relay subframe time at first, and then carries out reception at the corresponding service subframe time, and finally combines the twice received signals in the physical layer, which improves the service receiving performance. The combination between the downlink services can refer to the related description in the aforementioned step 403, and herein it will not be described any more.

Example two:
in the LTE system, when the layer two or layer three Relay technique is used, that is the RS correspondingly processes the downlink service sent from the eNB in the relay subframe, and then sends the downlink service to the UE in another subframe or a plurality of subframes. At this time, the downlink services in these two subframes are different; however, since the essential downlink services are the same, the UE also can utilize the downlink services received at two times, and improve the receiving performance.

In order to implement that the terminal receives the service twice, when the network side configures this downlink service, the network side notifies the used Relay technique to the UE, and at the same time, configures the relay subframe time and service subframe time bearing this service, and the transmission parameters corresponding to this downlink service born at the two times to the UE.

After receiving these configuration parameters, the UE can know that this downlink service uses the time division transmission mode, but the layer two or layer three Relay technique is used, and configuration parameters of the downlink services sent at the two times are different; when the UE receives downlink services, the UE carries out reception at corresponding relay subframe time according to the configuration information corresponding to the relay subframe; at the same time, the UE also carries out reception at corresponding service subframe time according to the configuration information corresponding to the service subframe;
since the layer two or layer three Relay technique is used, the UE is required to respectively process the downlink services of the two times, and then respectively carries out the physical layer processing and layer two processing on the twice received downlink services, and then carries out the combination. The combination mode can refer to the related description in the aforementioned step 403.

Example three:
in the LTE system, when the layer one Relay technique is used, that is the Relay only forwards the downlink service which is sent in the relay subframe from the eNB in another subframe, and does not process the downlink service, and at this time, the downlink services born in these two subframes are the same.

The eNB sends the downlink service to the RS by the air interface at the relay subframe time, and will use the omnidirectional transmission, and at this time, the user terminal nearby the eNB is able to receive the downlink service signal sent by the eNB. But at the service subframe time, the Relay also sends this downlink service signal in omnidirection. The user terminal can receive this downlink service in both of the two subframes.

In order to implement that the terminal receives the downlink service twice, when the network side configures this downlink service, besides that the transmission parameters corresponding to this downlink service are configured, the relay subframe time and the service subframe time bearing this downlink service are also configured to the UE; and the network side notifies the used Relay technique to the UE, which is equivalent to indicate the UE that the used configuration parameters at these two times are the same.

After receiving these configuration parameters of downlink service, the UE can know that this downlink service uses the time division transmission mode; when the UE receives this service, according to the configuration information, the UE carries out reception at the corresponding relay subframe time at first. If the quality of the received signal is very good, and when carrying out the demodulation according to the signal of this subframe can satisfy the Quality of Service (QoS) requirement of service, the UE can self-determine that the signal sent by the service subframe is not received any more so as to save the power consumption of the user terminal and simplify the processing of the user terminal. The signal quality can be determined by parameters such as the signal to noise ratio, the signal to interference and noise ratio, and the channel quality indication and so on, for example, a corresponding channel quality threshold can be set, and when the downlink channel quality of the eNB is better than the channel quality corresponding to the threshold, it can be determined to only receive the downlink service sent from this eNB. This example is suitable for the UE nearby the eNB and the channel quality of the downlink channel from the RS to the UE failing to reach to the set threshold.

Example four:
in the LTE system, when the layer one Relay technique is used, that is the Relay only forwards the downlink service which is sent in the relay subframe from the eNB in another subframe, and does not process the downlink service, and at this time, the downlink services born in these two subframes are the same.

The eNB sends the downlink service to the RS by the air interface at the relay subframe time, and will use the omnidirectional transmission, and at this time, the user terminal nearby the eNB is able to receive the downlink service signal sent from the eNB. But at the service subframe time, the Relay also sends this downlink service signal in omnidirection. The user terminal can receive this downlink service in both of the two subframes.

In order to implement that the terminal receives the downlink service twice, when the network side configures this downlink service, besides that the transmission parameters corresponding to this downlink service are configured, the relay subframe time and the service subframe time bearing this downlink service are also configured to the UE; and the network side notifies the used Relay technique to the UE, which is equivalent to indicate the UE that the used configuration parameters at these two times are the same.

After receiving these configuration parameters, the UE can know that this downlink service uses the time division transmission mode; when the UE receives this downlink service, the UE carries out reception at the corresponding relay subframe time according to the configuration information at first. If the quality of the received signal is not good but the quality of the received signal sent from the service subframe is very good, the UE can self-determine that the signal sent by the relay subframe is not received any more so as to save the power consumption of the terminal and simplify the processing of the terminal. The signal quality can be determined by parameters such as the signal to noise ratio, the signal to interference and noise ratio, and the channel quality indication and so on, for example, a corresponding channel quality threshold can be set, and when the downlink channel quality of the RS is better than the channel quality corresponding to the threshold, it can be determined to only receive the downlink service sent from this RS. This example is suitable for the UE nearby the Relay and the channel quality of the downlink channel from the eNB to the UE failing to reach to the set threshold.

Example five:
in the LTE system, when the layer one Relay technique is used, that is the Relay only forwards the downlink service which is sent in the relay subframe from the eNB in another subframe, and does not process the downlink service, and at this time, the downlink services born in these two subframes are the same.

The eNB sends the downlink service to the RS by the air interface at the relay subframe time, and will use the omnidirectional transmission, and at this time, the user terminal nearby the eNB is able to receive the downlink service signal sent from the eNB. But at the service subframe time, the Relay also sends this downlink service signal in omnidirection. The user terminal can receive this downlink service in both of the two subframes.

In order to implement that the terminal receives the downlink service twice, when the network side configures this downlink service, besides that the transmission parameters corresponding to this downlink service are configured, the relay subframe time and the service subframe time bearing this downlink service are also configured to the UE; and the network side notifies the used Relay technique to the UE, which is equivalent to indicate the UE that the used configuration parameters at these two times are the same.

After receiving these configuration parameters, the UE can know that this downlink service uses the time division transmission mode; when the UE receives this downlink service, the UE respectively carries out reception at the corresponding relay subframe time and service subframe time according to the configuration information, and the UE compares the qualities of signals received in the two links;
if both qualities of signals in these two links satisfy the requirements, the UE can self-determine that the signal sent from one of the links is received so as to save the power consumption of the terminal and simplify the processing of the terminal;
if both qualities of signals in these two links do not satisfy the requirements, the UE can combine the received signals sent from the two links so as to improve the receiving quality of this service;
if only the quality of signal in one link satisfies the requirements in the two links, the UE can combine the received signals sent from the two links so as to further improve the receiving quality of this service; and also can only receive the signal sent from said link of which the signal quality satisfies the requirement, and similarly the QoS requirement of the service also can be ensured.

The signal quality can be determined by parameters such as the signal to noise ratio, the signal to interference and noise ratio, and the channel quality indication and so on, for example, a corresponding channel quality threshold can be set, and when the downlink channel quality of the RS is better than the channel quality corresponding to the threshold, it can be determined to only receive the downlink service sent from this RS.

The above five examples are suitable for the scenario of the in-band Relay, that is the frequency used by the transmission link from the eNB to the RS is the same with the frequency used by transmission link from the RS to the UE, and at this time, the two links only send the downlink service in the time division.

Example six:
in the LTE system, when the out-band Relay technique is used, the frequency used by the transmission link from the eNB to the RS is different from the frequency used by transmission link from the RS to the UE, and at this time, the two links can transmit the downlink service at the same time, and also can transmit the downlink service in the time division.

When the network side configures the downlink service, the network side can configure the configuration information of the relay link and the service link bearing this downlink service to the UE, wherein the configuration information includes the located frequencies of these two links, and notifies the used Relay technique to the UE.

If a user terminal has the capability of receiving a downlink service in different frequency bands at the same time, the user terminal can receive this downlink service in these two links, that is to receive the same downlink service in different frequency bands respectively, and then carries out the combination after carrying out de-channel processing on received corresponding downlink service signal. Similar to examples one and two, if the layer one Relay technique is used, the signals received from the two links by the UE use the same configuration, and the UE can combine the two signals in the physical layer; and if the layer three Relay technique is used, the signals received from the two links by the UE use the different configurations, and the UE is required to process the two signals by different parameters and then carries out the combination in the layer three.

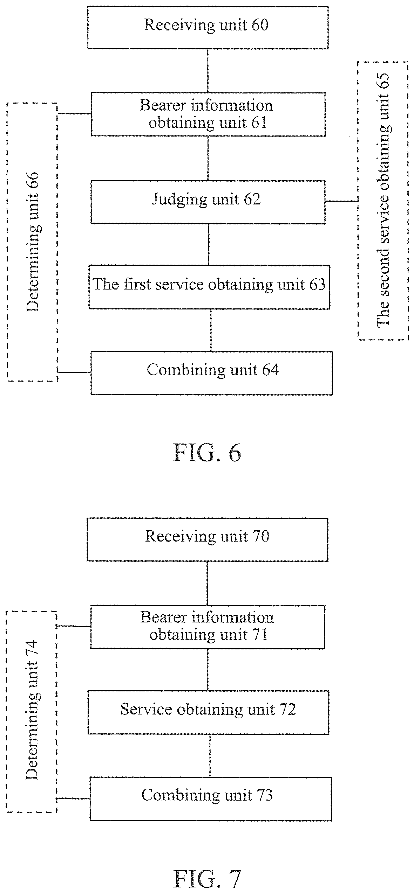

FIG. 6 is a structure schematic diagram of composition of the apparatus for receiving the downlink service in a long term evolution system according to the present invention, and as shown in FIG. 6, the apparatus for receiving the downlink service in a long term evolution system according to the present invention comprises a receiving unit 60, a bearer information obtaining unit 61, a judging unit 62, a first service obtaining unit 63 and a combining unit 64, wherein the receiving unit 60 is used for receiving downlink configuration information of the network side. The bearer information obtaining unit 61 is used for obtaining information of the bearer time slot of the base station side and the bearer time slot of the relay station side of the same downlink service of said user terminal in said downlink service configuration information. The judging unit 62 is used for judging whether channel qualities of the bearer channels where the bearer time slot of the base station side and the bearer time slot of the relay station side are located respectively reach to a set threshold, and when both do not reach to the set threshold, triggering the first service obtaining unit 63. The first service obtaining unit 63 is used for respectively intercepting the bearer time slot of the base station side and the bearer time slot of the relay station side, and obtaining the downlink service of said base station side and the downlink service of said relay station side. The combining unit 64 is used for combining the obtained downlink service of said base station side and the downlink service of said relay station side.

As shown in FIG. 6, the apparatus for receiving the downlink service in a long term evolution system according to the present invention further comprises: a second service obtaining unit 65, which is used for when the judging unit 62 determines that the channel quality of at least one bearer channel in the bearer channels where the bearer time slot of the base station side and the bearer time slot of the relay station side are located reaches to the set threshold, only intercepting the bearer time slot corresponding to the one bearer channel of which the channel quality reaches to the set threshold, and directly obtaining said downlink service.

As shown in FIG. 6, the apparatus for receiving the downlink service in a long term evolution system according to the present invention further comprises: a determining unit 66, which is used for determining the relay mode used by the network side; said downlink service configuration information further includes indication information of the relay mode used in the network side, and when the determining unit 66 determines that the relay mode used in the network side is the layer one relay mode, the combining unit 64 combines the downlink service of said base station side with the downlink service of said relay station side which have been obtained by the first service obtaining unit 63 in the physical layer; and when the determining unit 66 determines that the relay mode used in the network side is the layer two relay mode or the layer three relay mode, the combining unit 64 combines the downlink service of said base station side with the downlink service of said relay station side which have been obtained by the first service obtaining unit 63 after carrying out the physical layer processing and layer two processing respectively.

The person skilled in the art should understand that, when the Relay technique used in the network side is unique, the apparatus for receiving the downlink service in a long term evolution system according to the present invention can exclude the determining unit 66; and when the user terminal combines the received downlink services all the time,it is unnecessary to comprise the second service obtaining unit 65. The apparatus for receiving the downlink service in a long term evolution system according to the present invention is designed for the method for receiving the downlink service in a long term evolution system shown in FIG. 4, and the implementation functions of each processing unit shown in FIG. 6 can refer to FIG. 4 and the related description of examples one to six to be understood. The functions of each processing unit shown in FIG. 6 can be implemented by running programs on processors, and also can be implemented by specific logical circuits.

FIG. 7 is a structure schematic diagram of composition of another apparatus for receiving the downlink service in a long term evolution system, and as shown in FIG. 7, the apparatus for receiving the downlink service in a long term evolution system comprises a receiving unit 70, a bearer information obtaining unit 71, a service obtaining unit 72 and a combining unit 73, wherein the receiving unit 70 is used for receiving downlink service configuration information of the network side. The bearer information obtaining unit 71 is used for obtaining information of the bearer time slot of the base station side and the bearer time slot of the relay station side of the same downlink service of said user terminal in said downlink service configuration information. The service obtaining unit 72 is used for intercepting the bearer time slot of the base station side and the bearer time slot of the relay station side, and obtaining the downlink service of said base station side and the downlink service of said relay station side. The combining unit 73 is used for combining obtained the downlink service of said base station side and the downlink service of said relay station side.

As shown in FIG. 7, the apparatus for receiving the downlink service in a long term evolution system further comprises a determining unit 74, which is used for determining the relay mode used by the network side; said downlink service configuration information further includes indication information of the relay mode used in the network side, and when the determining unit 74 determines that the relay mode used in the network side is the layer one relay mode, the combining unit 73 combines the downlink service of said base station side with the downlink service of said relay station side which have been obtained by the service obtaining unit 72 in the physical layer; and when the determining unit 74 determines that the relay mode used in the network side is the layer two relay mode or the layer three relay mode, the combining unit 73 combines the downlink service of said base station side with the downlink service of said relay station side which have been obtained by the service obtaining unit 72 after carrying out the physical layer processing and layer two processing respectively.

The person skilled in the art should understand that, when the Relay technique used in the network side is unique, the apparatus for receiving the downlink service in a long term evolution system according to the present invention can exclude the determining unit 74. The apparatus for receiving the downlink service in a long term evolution system according to the present invention is designed for the method for receiving the downlink service in a long term evolution system shown in FIG. 5, and the implementation functions of each processing unit shown in FIG. 7 can refer to FIG. 5 and the related description of examples one to six to be understood. The functions of each processing unit shown in FIG. 7 can be implemented by running programs on the processors, and also can be implemented by specific logical circuits.

The above description is only the preferable example, which is not used for limiting the protection scope of the present invention.

### Industrial Applicability

Comparing with the prior art, the present invention improves the downlink service gain of the user terminal in the cell edge jointly covered by the eNB and the RS, and ensures the communication quality of the terminal user.

## Claims

1. A method for receiving a downlink service in a long term evolution system, comprising:
after receiving downlink service configuration information from a network receiving by a user terminal data from a bearer time slot of a base station side and a bearer time slot of a relay station side which carry a same downlink service(401); and
judging by said user terminal whether channel quality of bearer channels where said bearer time slot of the base station side and said bearer time slot of the relay station side are located reaches to a set threshold respectively(402), and when both do not reach to the set threshold, intercepting said bearer time slot of the base station side and said bearer time slot of the relay station side, and combining a downlink service sent by said base station side with the downlink service sent by said relay station side after obtaining the downlink service sent by said base station side and the downlink service sent by said relay station side(403).

2. The method as claimed in claim 1, which further comprises:
when said user terminal judges that the channel quality of at least one bearer channel in the bearer channels where said bearer time slot of the base station side and said bearer time slot of the relay station side are located reaches to the set threshold, only intercepting the bearer time slot corresponding to the one bearer channel of which the channel quality reaches to the set threshold (404).

3. The method as claimed in claim 1, wherein the bearer time slot of the base station side and the bearer time slot of the relay station side of the same downlink service of said user terminal are located in carriers of a same frequency or different frequencies.

4. The method as claimed in claim 1 or 3, wherein said downlink service configuration information further includes indication information of a relay mode used by the network side.

5. The method as claimed in claim 4, wherein the step of combining the downlink service sent by said base station side with the downlink service sent by said relay station side comprises:
when said user terminal determines that the relay mode used by the network side is a layer one relay mode, combining the obtained downlink service of said base station side with the downlink service of said relay station side in a physical layer.

6. The method as claimed in claim 4, wherein the step of combining the downlink service sent by said base station side with the downlink service sent by said relay station side comprises:
when said user terminal determines that the relay mode used by the network side is a layer two relay mode or layer three relay mode, combining the obtained downlink service of said base station side with the downlink service of said relay station side after carrying out physical layer processing and layer two processing respectively on said obtained downlink service of said base station side and the downlink service of said relay station side.

7. An apparatus for receiving a downlink service in a long term evolution system, comprising:
a receiving unit(60), which is configured to receive downlink service configuration information of a network side;
a bearer information obtaining unit(61), which is configured to obtain information of a bearer time slot of a base station side and a bearer time slot of a relay station side of a same downlink service of a user terminal in said downlink service configuration information;
a judging unit(62), which is configured to judge whether channel quality of bearer channels where said bearer time slot of the base station side and said bearer time slot of the relay station side are located reaches to a set threshold respectively, and when both do not reach to the set threshold, trigger a first service obtaining unit;
the first service obtaining unit(63), which is configured to intercept said bearer time slot of the base station side and said bearer time slot of the relay station side respectively, and obtain a downlink service of said base station side and the downlink service of said relay station side; and
a combining unit(64), which is configured to combine the obtained downlink service of said base station side with the downlink service of said relay station side.

8. The apparatus as claimed in claim 7, wherein said apparatus further comprises a second service obtaining unit (65),
said judging unit is also configured to when the channel quality of at least one bearer channel in the bearer channels where said bearer time slot of the base station side and said bearer time slot of the relay station side are located reaches to the set threshold is judged, trigger the second service obtaining unit;
said second service obtaining unit is configured to only intercept the bearer time slot corresponding to the one bearer channel of which the channel quality reaches to the set threshold, and directly obtain the downlink service of said base station side and the downlink service of said relay station side.

9. The apparatus as claimed in claim 7 or 8, which further comprises a determining unit(66), said determining unit being configured to determine a relay mode used by the network side; wherein
said downlink service configuration information further includes indication information of the relay mode used by the network side;
said combining unit is configured to:
when said determining unit determines that the relay mode used by the network side is a layer one relay mode, combine the downlink service of said base station side with the downlink service of said relay station side obtained by the first service obtaining unit in a physical layer; and
when said determining unit determines that the relay mode used by the network side is a layer two relay mode or layer three relay mode, combine the downlink service of said base station side with the downlink service of said relay station side after carrying out physical layer processing and layer two processing respectively on said downlink service of said base station side and the downlink service of said relay station side obtained by said first service obtaining unit.

## Patentansprüche

1. Verfahren zum Empfangen eines Downlink-Service in einem Long Term Evolution System, welches umfasst:
nach Empfangen von Downlink-Service Konfigurations-Information von einem Netzwerk, Empfangen von Daten einer Benutzerstation über einen Träger-Zeitkanal einer Basisstation-Seite und einen Träger-Zeitkanal einer Relaisstation-Seite, die den gleichen Downlink-Service (401) führen,; und
Bewerten durch die Benutzerstation, ob die Kanalqualität der Trägerkanäle, auf denen der Träger-Zeitkanal der Basisstation-Seite und der Träger-Zeitkanal der Relaisstation-Seite vorgesehen sind, jeweils einen bestimmten Grenzwert (402) erreicht, und wenn beide den bestimmten Grenzwert nicht erreichen, Abstellen des Träger-Zeitkanals der Basisstation-Seite und des Träger-Zeitkanals der Relaisstation-Seite, und Kombinieren eines von der Basisstation-Seite übertragenen Downlink-Services mit dem von der Relaisstation-Seite übertragenen Downlink-Service, nachdem der von der Basisstation-Seite übertragene Downlink-Service und der von der Relaisstation-Seite übertragene Downlink-Service (403) erhalten wurde.

2. Verfahren nach Anspruch 1, welches weiter umfasst:
wenn die Benutzerstation feststellt, dass die Kanalqualität von mindestens einem Trägerkanal in den Trägerkanälen, auf denen der Träger-Zeitkanal der Basisstation-Seite und der Träger-Zeitkanal der Relaisstation-Seite vorgesehen sind, den bestimmten Grenzwert erreicht, nur Abstellen des Träger-Zeitkanals entsprechend dem einen Trägerkanal dessen Kanalqualität den bestimmten Grenzwert (404) erreicht.

3. Verfahren nach Anspruch 1, wobei der Träger-Zeitkanal der Basisstation-Seite und der Träger-Zeitkanal der Relaisstation-Seite des gleichen Downlink-Services der Benutzerstation in Trägern gleicher Frequenz oder verschiedener Frequenzen vorgesehen sind.

4. Verfahren nach Anspruch 1 oder 3, worin die Downlink-Service Konfigurations-Information weiter Kennzeichen-Information eines von der Netzwerk-Seite verwendeten Relais-Modus beinhaltet.

5. Verfahren nach Anspruch 4, wobei der Schritt des Kombinierens des von der Basisstation-Seite übermittelten Downlink-Service mit dem von der Relaisstation-Seite übermittelten Downlink-Service umfasst:
wenn die Benutzerstation bestimmt, dass der von der Netzwerk-Seite verwendete Relais-Modus ein Relais-Modus der Layer eins ist, Kombinieren des erhaltenen Downlink-Services der Basisstation-Seite mit dem Downlink-Service der Relaisstation-Seite in einer Physical Layer.

6. Verfahren nach Anspruch 4, wobei der Schritt des Kombinierens des von der Basisstation-Seite übermittelten Downlink-Service mit dem von der Relaisstation-Seite übermittelten Downlink-Service umfasst:
wenn die Benutzerstation bestimmt, dass der von der Netzwerk-Seite verwendete Relais-Modus ein Relais-Modus der Layer zwei ist oder ein Relais-Modus der Layer drei, Kombinieren des erhaltenen Downlink-Service der Basisstation-Seite mit dem Downlink-Service der Relaisstation-Seite nach Durchführen einer Physical Layer Verarbeitung und Layer zwei Verarbeitung an dem erhaltenen Downlink-Service der Basisstation-Seite und dem Downlink-Service der Relaisstation-Seite.

7. Vorrichtung zum Empfang eines Downlink-Service in einem ein Long Term Evolution System, welches umfasst:
eine Empfangseinheit (60), die ausgestaltet ist, Downlink-Service Konfigurations-Information einer Netzwerk-Seite zu empfangen;
eine Träger-Informations-erhaltene Einheit (61), die ausgestaltet ist, Informationen eines Träger-Zeitkanals einer Basisstation-Seite und eines Träger-Zeitkanal einer Relaisstation-Seite des gleichen Downlink-Service einer Benutzerstation in der Downlink-Service Konfigurations-Information zu erhalten;
eine Bewertungs-Einheit (62), die ausgestaltet ist, zu bewerten, ob die Kanalqualität der Trägerkanäle, auf denen der Träger-Zeitkanal der Basisstation-Seite und der Träger-Zeitkanal der Relaisstation-Seite vorgesehen sind, einen bestimmten Grenzwert erreicht, und wenn beide den bestimmten Grenzwert nicht erreichen, Auslösen einer ersten Service-erhaltenden Einheit;
die erste Service-erhaltende Einheit (63), die ausgestaltet ist, den Träger-Zeitkanal der Basisstation-Seite und den Träger-Zeitkanal der Relaisstation-Seite abzustellen, und einen Downlink-Service der Basisstation-Seite und Downlink-Service der Relaisstation-Seite zu erhalten; und
eine Kombinationseinheit (64), die ausgestaltet ist, den erhaltenen Downlink-Service der Basisstation-Seite mit dem Downlink-Service der Relaisstation-Seite zu kombinieren

8. Vorrichtung nach Anspruch 7, worin die Vorrichtung weiter eine zweite Service-erhaltende Einheit (65) umfasst, worin die Bewertungseinheit weiter ausgestaltet ist, um, wenn bewertet wird, dass die Kanalqualität mindestens eines Trägerkanals in den Trägerkanälen, auf denen der Träger-Zeitkanal der Basisstation-Seite und der Träger-Zeitkanal der Relaisstation-Seite vorgesehen sind, den bestimmten Grenzwert erreicht, die zweite Service erhaltende Einheit auszulösen;
worin die zweite Service-erhaltene Einheit ausgestaltet ist, nur den Träger-Zeitkanal entsprechend dem einen Trägerkanal, bei dem die Kanalqualität den bestimmten Grenzwert erreicht, abzuschalten und direkt den Downlink-Service der Basisstation-Seite und den Downlink-Service der Relaisstation-Seite zu erhalten.

9. Vorrichtung nach Anspruch 7 oder 8, welche weiter eine Bestimmungseinheit (66) umfasst, worin die Bestimmungseinheit ausgestaltet ist, einen von der Netzwerk-Seite verwendeten Relais-Modus zu bestimmen; worin
die Downlink-Service Konfigurations-Information weiter Kennzeichen-Information des von der Netzwerk-Seite verendeten Relais-Modus umfasst;
worin die Kombinierungseinheit ausgestaltet ist:
wenn die Bestimmungseinheit bestimmt, dass der von der Netzwerk-Seite verwendete Relais-Modus ein Schicht eins Relais-Modus ist, Kombinieren des Downlink-Service der Basisstation-Seite mit dem Downlink-Service der Relaisstation-Seite, erhalten von der ersten Service-erhaltenden Einheit, in einer Physical Layer; und
wenn die Bestimmungseinheit bestimmt, dass der von der Netzwerk-Seite verwendete Relais-Modus ein Schicht zwei Relais-Modus oder Schicht drei Relais-Modus ist, Kombinieren des Downlink-Service der Basisstation-Seite mit dem Downlink-Service der Relaisstation-Seite nach Ausführen einer Physical Layer Verarbeitung bzw. Layer zwei Verarbeitung an dem Downlink-Service der Basisstation-Seite und dem Downlink-Service der Relaisstation-Seite, erhalten von der ersten Service-erhaltenden Einheit.

## Revendications

1. Procédé de réception d'un service de liaison descendante dans un système de technologie d'évolution à long terme, comprenant les étapes ci-dessous consistant à :
suite à la réception d'informations de configuration de service de liaison descendante en provenance d'un réseau, recevoir, par le biais d'un terminal d'utilisateur, des données provenant d'une tranche de temps de porteuse d'un côté de station de base et d'une tranche de temps de porteuse d'un côté de station de relais qui transportent un même service de liaison descendante (401) ; et
juger, par le biais dudit terminal d'utilisateur, si une qualité de canal de canaux de porteuse où ladite tranche de temps de porteuse du côté de station de base et ladite tranche de temps de porteuse du côté de station de relais sont localisées, atteint respectivement un seuil défini (402), et lorsque les deux n'atteignent pas le seuil défini, intercepter ladite tranche de temps de porteuse du côté de station de base et ladite tranche de temps de porteuse du côté de station de relais, et combiner un service de liaison descendante envoyé par ledit côté de station de base avec le service de liaison descendante envoyé par ledit côté de station de relais, après avoir obtenu le service de liaison descendante envoyé par ledit côté de station de base et le service de liaison descendante envoyé par ledit côté de station de relais (403).

2. Procédé selon la revendication 1, lequel comprend en outre l'étape ci-dessous consistant à :
lorsque ledit terminal d'utilisateur juge que la qualité de canal d'au moins un canal de porteuse dans les canaux de porteuse où sont localisées ladite tranche de temps de porteuse du côté de station de base et ladite tranche de temps de porteuse du côté de station de relais atteint le seuil défini, n'intercepter que la tranche de temps de porteuse correspondant au canal de porteuse dont la qualité de canal atteint le seuil défini (404).

3. Procédé selon la revendication 1, dans lequel la tranche de temps de porteuse du côté de station de base et la tranche de temps de porteuse du côté de station de relais du même service de liaison descendante dudit terminal d'utilisateur sont localisées dans des porteuses d'une même fréquence ou de fréquences différentes.

4. Procédé selon la revendication 1 ou 3, dans lequel lesdites informations de configuration de service de liaison descendante incluent en outre des informations d'indication d'un mode de relais utilisé par le côté de réseau.

5. Procédé selon la revendication 4, dans lequel l'étape consistant à combiner le service de liaison descendante envoyé par ledit côté de station de base avec le service de liaison descendante envoyé par ledit côté de station de relais comprend l'étape ci-dessous consistant à :
lorsque ledit terminal d'utilisateur détermine que le mode de relais utilisé par le côté de réseau est un mode de relais de couche « 1 », combiner le service de liaison descendante obtenu dudit côté de station de base avec le service de liaison descendante dudit côté de station de relais dans une couche physique.

6. Procédé selon la revendication 4, dans lequel l'étape consistant à combiner le service de liaison descendante envoyé par ledit côté de station de base avec le service de liaison descendante envoyé par ledit côté de station de relais comprend l'étape ci-dessous consistant à :
lorsque ledit terminal d'utilisateur détermine que le mode de relais utilisé par le côté de réseau est un mode de relais de couche « 2 » ou un mode de relais de couche « 3 », combiner le service de liaison descendante obtenu dudit côté de station de base avec le service de liaison descendante dudit côté de station de relais après avoir mis en oeuvre un traitement de couche physique et un traitement de couche « 2 », respectivement, sur ledit service de liaison descendante obtenu dudit côté de station de base et sur le service de liaison descendante dudit côté de station de relais.

7. Appareil destiné à recevoir un service de liaison descendante dans un système de technologie d'évolution à long terme, comprenant :
une unité de réception (60), qui est configurée de manière à recevoir des informations de configuration de service de liaison descendante d'un côté de réseau ;
une unité d'obtention d'informations de porteuse (61) qui est configurée de manière à obtenir des informations d'une tranche de temps de porteuse d'un côté de station de base et d'une tranche de temps de porteuse d'un côté de station de relais d'un même service de liaison descendante d'un terminal d'utilisateur dans lesdites informations de configuration de service de liaison descendante ;
une unité de jugement (62), qui est configurée de manière à juger si une qualité de canal des canaux de porteuse où sont localisées ladite tranche de temps de porteuse du côté de station de base et ladite tranche de temps de porteuse du côté de station de relais atteint un seuil défini, respectivement, et lorsque les deux n'atteignent pas le seuil défini, à déclencher une première unité d'obtention de service ;
la première unité d'obtention de service (63) qui est configurée de manière à intercepter ladite tranche de temps de porteuse du côté de station de base et ladite tranche de temps de porteuse du côté de station de relais, respectivement, et à obtenir un service de liaison descendante dudit côté de station de base et le service de liaison descendante dudit côté de station de relais ; et
une unité de combinaison (64) qui est configurée de manière à combiner le service de liaison descendante obtenu dudit côté de station de base avec le service de liaison descendante dudit côté de station de relais.

8. Appareil selon la revendication 7, dans lequel ledit appareil comprend en outre une seconde unité d'obtention de service (65) ;
dans lequel ladite unité de jugement est en outre configurée de manière à, lorsqu'il est jugée que la qualité de canal d'au moins un canal de porteuse dans les canaux de porteuse où sont localisées ladite tranche de temps de porteuse du côté de station de base et ladite tranche de temps de porteuse du côté de station de relais atteint le seuil défini, déclencher la seconde unité d'obtention de service ;
dans lequel ladite seconde unité d'obtention de service est configurée de manière à n'intercepter que la tranche de temps de porteuse correspondant audit un canal de porteuse dont la qualité de canal atteint le seuil défini, et à obtenir directement le service de liaison descendante dudit côté de station de base et le service de liaison descendante dudit côté de station de relais.

9. Appareil selon la revendication 7 ou 8, lequel comprend en outre une unité de détermination (66), ladite unité de détermination étant configurée de manière à déterminer un mode de relais utilisé par le côté de réseau ; dans lequel
lesdites informations de configuration de service de liaison descendante comprennent en outre des informations d'indication du mode de relais utilisé par le côté de réseau ;
dans lequel ladite unité de combinaison est configurée de manière à :
lorsque ladite unité de détermination détermine que le mode de relais utilisé par le côté de réseau est un mode de relais de couche « 1 », combiner le service de liaison descendante dudit côté de station de base avec le service de liaison descendante dudit côté de station de relais obtenu par la première unité d'obtention de service, dans une couche physique ; et
lorsque ladite unité de détermination détermine que le mode de relais utilisé par le côté de réseau est un mode de relais de couche « 2 » ou un mode de relais de couche « 3 », combiner le service de liaison descendante dudit côté de station de base avec le service de liaison descendante dudit côté de station de relais, après avoir mis en oeuvre un traitement de couche physique et un traitement de couche « 2 », respectivement, sur ledit service de liaison descendante dudit côté de station de base et sur le service de liaison descendante dudit côté de station de relais obtenu par ladite première unité d'obtention de service.
